Europäisches Patentamt

European Patent Office

Office européen des brevets

(11) Publication number: **0 315 357 B1**

# EUROPEAN PATENT SPECIFICATION

(45) Date of publication of patent specification: **06.05.92**  (51) Int. Cl.⁵: **G01P  3/481**

(21) Application number: **88310031.5**

(22) Date of filing: **25.10.88**

(54) Tachometer.

(30) Priority: **03.11.87 US 116634**

(43) Date of publication of application:
**10.05.89 Bulletin  89/19**

(45) Publication of the grant of the patent:
**06.05.92 Bulletin  92/19**

(84) Designated Contracting States:
**DE FR GB IT**

(56) References cited:
**US-A- 3 693 073**
**US-A- 3 942 113**

**FUNKSCHAU, no. 16, August 1972, pages 589-590, Munich, DE; J. ERZ: "Elekfronisches Steuergerät für Nebenuhren"**

(73) Proprietor: **Bear Automotive Service Equipment Company**
**2855 James Drive**
**New Berlin Wisconsin 53151-0880(US)**

(72) Inventor: **Marino, Joseph A.**
**2408 Broken Hill Road**
**Waukesha, Wisconsin 53186(US)**
Inventor: **Makhija, Surender K.**
**21370 Lower Cambridge Circle**
**Brookfield, Wisconsin 53005(US)**
Inventor: **Taghikhani, Majid**
**8021 West Custer Avenue**
**Milwaukee, Wisconsin 53218(US)**
Inventor: **Puetz, Peter A.**
**729 Buena Vista Avenue**
**Waukesha, Wisconsin 53186(US)**

(74) Representative: **Hale, Peter et al**
**Kilburn & Strode 30 John Street**
**London WC1N 2DD(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.08/2.18/2.0)

## Description

The present invention relates to testing equipment for internal combustion engines. In particular, the present invention relates to a tachometer for determining the engine speed (RPM) of an internal combustion engine of a vehicle.

In newer model automobiles, tachometer (RPM) measurement methods have become a problem because it is impossible to connect engine speed transducers to some vehicles, and extremely difficult to connect transducers to others.

The distributorless ignition system (DIS) used in newer model vehicles exhibits these problems. DIS systems have dual firing voltage on each spark plug wire, one for normal firing and the other for what is known as "waste firing". The prior art secondary type transducers pick up both spark plug firings, and the measuring equipment must distinguish these signals in order to develop a proper tachometer reading. The secondary signals sensed by these prior art transducers are not considered to be as reliable as one would like, since spark plug condition and cross firing can create undesirable or unreliable information.

In the prior art, it was customary to use the primary voltage or current as a source of tachometer information. The DIS systems, however, are typically packaged so that they do not have available a connection for sensing primary voltage.

For that reason, a special pick-up was developed which would use the primary current when available. There are, however, vehicles in which even current readings have become difficult because the wire is bunched and harnessed in a complete cable.

One example of a known tachometer circuit is described in US-A-3693073. This discloses a device for testing internal combustion engines, comprising an averaging circuit which responds proportionally to the number of times that the breaker points of the engine's distributor open or close. The output of the circuit is, thus, an average value proportional to engine speed.

There is a need for an improved tachometer which is compatible with the modern DIS systems, and which does not require special transducers, and which is compatible with both distributor and distributorless ignition systems.

According to the present invention a circuit for providing an output signal representative of the speed of an engine having an electrical ignition system connected to a battery, the circuit comprising means for producing the output signal as a function of a selected signal related to the engine speed, is characterised in that the circuit also comprises means for deriving the selected signal from the battery, which signal is representative of a time-varying component of the output of the battery related to the engine speed.

The present invention is a tachometer which produces a signal representative of engine speed of an internal combustion engine based upon signals derived from the battery which powers the ignition system of the internal combustion engine. The signal derived from the battery contains many different components produced by the various electrical systems connected to the vehicle battery. In a typical automobile, sources of signals appearing at the vehicle battery terminal include the primary switching current, alternator ripple, spark plug firing noise, injector opening pulses, radiator cooling fan, brush noise, electronic voltage regulator operations, air conditioning system noise, and others. Basically, any system in the vehicle that uses substantial amounts of electrical power will contribute a component or components to the electrical signal which is appearing across the vehicle battery terminals.

In one embodiment, the invention comprises a circuit for providing an output signal representative of speed of an internal combustion engine of the type having an electrical ignition system connected to a battery, the circuit comprising:

means for deriving a battery signal representative of battery current flow having a plurality of time-varying components;

means for selecting from the battery signal a selected time-varying component which is representative of engine speed; and

means for producing the output signal as a function of the selected time-varying component.

With the present invention, the signal from the vehicle battery is filtered and signal processed to separate the wanted signal (which represents operation of the ignition system) from the unwanted signals. The result of the filtering and signal processing is, in preferred embodiments, a pulse signal which has a frequency related to the speed of the engine.

Depending on the particular vehicle, there are two potential signal components which can be used by the tachometer of the present invention. The first and more common signal component is produced by the primary switching current.

In those vehicles where there is interference between the primary switching current and the regulator operation, a second signal component produced by short bursts of high frequency ringing can also be used to derive an output signal representative of engine RPM.

The invention also extends to a method of measuring speed of an internal combustion engine of the type having an electrical ignition system connected to a battery, the method comprising:

deriving from current flow of the battery a time-varying signal associated with operation of the electrical ignition system; and

providing an output signal representative of engine speed as a function of the time-varying signal.

Preferably, deriving the time varying signal comprises:

removing a DC component of a signal received from the battery; and

filtering AC components of the signal received from the battery to derive the time-varying signal.

Preferably, the filtering comprises:

removing the signal received from the battery signal components having frequencies outside a range associated with primary ignition current pulses. Alternatively, the filtering comprises:

removing from the signal received from the battery signal components having frequencies outside a range associated, with ignition bursts.

In preferred embodiments of the present invention, the tachometer includes a first signal processing path which separates the primary switching current signal component from the battery. A second current path separates the signal component representing short bursts of high frequency ringing which occur when spark plugs fire. Switching means select the signal path which produces the more reliable signal, the supplies that signal to pulse generating means (such as a one shot or monostable multivibrator) to produce the output pulse signal.

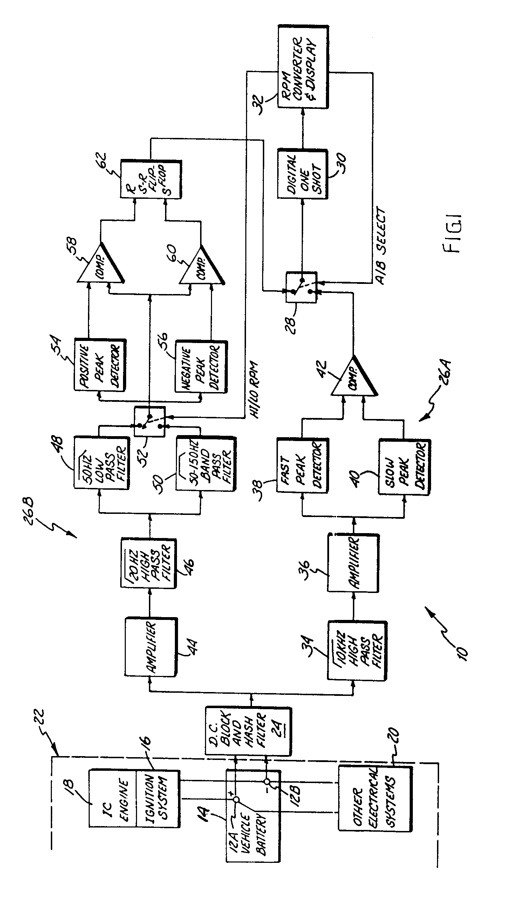

The present invention can be put into practice in several ways, one of which will now be described by way of example with reference to the single accompanying drawing in which Figure 1 shows an electrical block diagram of a battery tachometer according to the present invention, as connected to a vehicle battery.

In the Figure, tachometer 10 is connected to plus (+) and minus (-) terminals 12A and 12B, respectively, of vehicle battery 14. Also shown in the Figure are ignition system 16 of internal combustion engine 18, as well as other electrical systems 20 of vehicle 22. Battery 14 is the conventional DC battery used to provide electrical power for vehicle 22.

Tachometer 10 makes electrical connection to terminals 12A and 12B of battery 14 either directly, or through a convenient connector, such as the cigarette lighter receptacle (not shown) of vehicle 22.

Tachometer 10 includes DC block and hash filter circuit 24 which receives the signals from vehicle battery 14. The output of DC block and hash filter 24 is provided to two separate signal processing paths 26A and 26B. The outputs of signal processing paths 26A and 26B merge at A/B select switch 28. The output selected by switch 28 is provided to digital one shot 30, which produces an output pulse signal which is supplied to RPM converter and display 32. The output pulses from digital one shot 30 are produced at a frequency which is representative of RPM of the vehicle engine. RPM converter and display 32 converts the output pulses from digital one shot 30 to an RPM value, and displays that value either numerically or graphically.

Signal processing circuit path 26A includes high pass filter 34, amplifier 36, fast peak detector 38, slow peak detector 40 and comparator 42. Circuit path 26A separates, from the vehicle battery signal, the component which represents short bursts of high frequency ringing which occurs when a spark plug fires.

Signal processing circuit path 26B includes amplifier 44, high pass filter 46, low pass filter 48, band pass filter 50, HI/LO RPM select switch 52, positive peak detector 54, negative peak detector 56, comparators 58 and 60, and flipflop 62. The purpose of signal processing circuit path 26B is to separate the signal component which represents the current provided to the primary of the ignition system 18. These current pulses have approximately a fifty percent duty cycle, and circuit path 26B filters the signal based on this approximate fifty percent duty cycle.

DC block and hash filter 24 blocks the DC component of the battery signal from reaching either circuit path 26A or 26B. In addition to blocking the DC component (and leaving only the AC components for further signal processing ) circuit 24 also provides some hash filtering. The purpose of this filtering is to eliminate some very high frequency signals which cannot be handled by the subsequent processing in signal paths 26A and 26B.

In circuit path 26A, the signals from DC block and hash filter circuit 24 are first filtered by high pass filter 34. In the embodiment shown in the Figure, high pass filter 34 is a 10 kHz high pass filter which attenuates signals other than the ignition bursts. These bursts are then amplified by amplifier 36 and provided to peak detectors 38 and 40. Fast peak detector 38 has an output which rises quickly to the peak value of its input and falls off quickly. Slow peak detector 40, on the other hand, has an output which rises more slowly toward the peak of the input and has a slow fall off. The outputs of peak detectors 38 and 40 are sent to comparator 42. The output of fast peak detector 38 rises faster than the output of slow peak detector 40, and comparator 42 outputs a pulse of a length equal to the time required by slow peak detector 40 to catch up with fast peak detector 38.

The long fall-off time of slow peak detector 40 aids in preventing extraneous output pulses from comparator 42.

Signal processing path 26B filters lower frequency signals, since it is looking for the primary switching current pulses. The signal from DC block and hash filter circuit 24 is first amplified by amplifier 44. 20 Hz high pass filter 46 is then used to attenuate signals which are lower than those produced by an idling engine. The filtered signal is then sent to filters 48 and 50. Low pass filter 48 is a 50 Hz low pass filter which together with high pass filter 46 covers the range (about 20 Hz to about 50 Hz) for idling four cycle (stroke) engines with four, six or eight cylinders.

Band pass filter 50, on the other hand, is a band pass filter which covers the range (50-150 Hz) for revving engines. The outputs of filters 48 and 50 are provided to HI/LO RPM select switch 52. The selection of the filter 48 or 50 used to provide a signal to the subsequent components of signal processing path 26 is based upon feedback from RPM converter and display 32 by way of a high/low RPM signal, which controls the state of switch 52. When the RPM as determined by RPM converter and display 32 exceeds the idle range, switch 52 is changed so that the output of band pass filter 50 is used. As the engine RPM drops back to the idle range, switch 52 is changed back to low pass filter 48. Filters 48 and 50 have overlapping ranges, so that the signal will not be lost between filter ranges. The switching between ranges by RPM converter and display 32 and switch 52 preferably has a hysteresis band to prevent hunting.

The selected signal from switch 52 is provided to positive peak detector 54 and negative peak detector 56. The signal is also fed to comparators 58 and 60 for comparison with the outputs of peak detectors 54 and 56, respectively. The outputs + of peak detectors 54 and 56 are a fraction (preferably about one-half) of their respective peak signal points. Comparators 58 and 60 drive the reset and set inputs of flipflop 62, respectively. When the signal from filter 48 or filter 50 exceeds the fractional portion of the average positive signal peak as represented by the output of positive peak detector 54, flipflop 62 is reset. Similarly, when the signal from filter 48 or 50 is at a negative value less than the fractional average negative peaks represented by the output of negative peak detector 56, flipflop 62 is set. This allows for a noise immunity of about one-half of the peak-to-peak signal. Furthermore, this noise immunity value is not a fixed value, but floats along with the signal levels. The output of flipflop 62 is usually a good representation of the firing rate of the engine.

The outputs of signal processing paths 26A and 26B are provided to A/B select switch 28. In one embodiment, switch 28 is controlled by an operator based upon an evaluation of which signal processing path will be more effective. That determination may be made, for example, by the operator's familiarity with the particular vehicle and the type of signals which it produces.

In other embodiments of the present invention, switch 28 is controlled by an A/B select signal which may be produced by other signal processing circuitry within RPM converter and display 32. The selection of state of the A/B select signal, in this embodiment, is based for example on a statistical analysis of the outputs of both signal paths 26A and 26B. In this embodiment, RPM converter and display 32 preferably includes a digital computer such as a microcomputer.

The output of switch 28 is provided to the input of digital one shot 30, which produces an output pulse of a precise time duration to RPM converter and display 32. The frequency of the output pulses of one shot 30 is controlled by the particular input signal from either signal processing path 26A or 26B.

One shot 30 is preferably a digital device, because it provides a precise time duration for causing an interrupt, reading the counter, and resetting it to an initial value for measurement of time until the next pulse. The counter value can be corrected to compensate for the time of the one shot as it can be much more precise than an analog one shot. In other embodiments of the present invention, however, one shot 30 can be an analog rather than a digital device.

In conclusion, the present invention is a tachometer which is reliable and which is easily connected to every vehicle because it merely requires access to the positive and negative terminals of the vehicle battery. This connection can be made either directly to the vehicle battery itself, or to other accessible points such as the cigarette lighter receptacle.

An important advantage of the tachometer of the present invention is its ability to operate with all levels of signals which are available on the battery terminals. In use, tachometer 10 filters the various signals found on the battery terminals 12A and 12B and develops a usable triggering signal for making tachometer (RPM) readings. Tachometer 10 overcomes the problems of making connections to new ignition systems which are devoid of test points for RPM readings. It also does not rely on secondary wire connections, since in some ignition systems these connections are either covered and not available, or are extremely difficult and of questionable reliability.

Although the tachometer of the present invention can be connected directly to the battery terminals of a vehicle, the signal processing circuitry of tachometer 10 will also accept other sources of the input battery signal (which represents the flow of battery current). For example, Hall effect or inductive type current probes can be used to sense battery current flow at or near the battery. Similarly, a current shunt connected in series with one of the battery terminals or a device for measuring voltage across the battery cable between vehicle ground and the (-) battery terminal can be used to supply the battery signal to battery tach 10 of the present invention.

The filter functions of paths 26A and 26B can be implemented in a number of different ways, and with different technologies. For example, programmable-type filters such as switched-capacitor or charge coupled device filters can be used to provide low pass, band pass and high pass filtering. With programmable-type filters, the need for a separate HI/LO RPM switch 52 may be eliminated, and the low pass and band pass filters 48 and 50 can be embodied in a single variable characteristic filter.

Another advantage of the present invention is its compatability with digital signal processing techniques. Except for DC block and hash filter 24, the remaining circuitry of battery tach 10 shown in the Figure can be implemented in either analog or digital circuitry. Digital signal processing techniques offer the further advantage of allowing more adaptive filtering and, in some cases, more complex filtering without a corresponding increase in hardware complexity or cost.

**Claims**

1. A circuit for providing an output signal representative of the speed of an engine having an electrical ignition system connected to a battery, the circuit comprising means for producing the output signal as a function of a selected signal related to the engine speed, characterised in that the circuit also comprises means for deriving the selected signal from the battery, which signal is representative of a time-varying component of the output of the battery related to the engine speed.

2. A circuit as claimed in claim 1 wherein the means for deriving selects the time-varying component from among the signal components associated with operation of the electrical ignition system.

3. The circuit of claim 2 wherein the means for deriving comprises means for filtering out time-varying components having a frequency outside a range of frequencies normally associated with ignition bursts to select a second time-varying component representative of engine speed and wherein the means for producing the output signal includes means for selecting one of the first and second time-varying components.

4. The circuit of claim 2 wherein the means for deriving comprises means for filtering out time-varying components having a frequency outside a range of frequencies normally associated with ignition bursts to select a second time-varying component representative of engine speed.

5. A circuit as claimed in claim 4 wherein the range of frequencies is greater than about 10 kHz.

6. A circuit as claimed in claim 4 or 5 wherein the means for producing the output signal comprises first and second peak detector means for producing first and second signals as a function of peak values of the second time-varying component, the first and second peak detector means exhibiting different time responses to the second time-varying component; and comparator means for comparing the first and second signals to produce the output signal.

7. A circuit as claimed in claim 1 or 2 wherein the means for deriving comprises means for filtering out time-varying components having a frequency outside a range of frequencies normally associated with primary ignition current pulses to select a first time-varying component representative of engine speed.

8. A circuit as claimed in claim 7 wherein the means for filtering comprises first filter means for filtering out frequencies other than those in a first range associated with primary ignition current pulses produced by the engine when idling and second filter means for filtering out frequencies other than those in a second range associated with primary ignition current pulses produced by the engine when revving.

9. A circuit as claimed in claim 8 wherein the first range is between about 20 Hz and about 50 Hz.

10. The circuit of claim 8 or 9 wherein the second range is between about 50 Hz and about 150 Hz.

11. A circuit as claimed in claim 8, 9 or 10 further comprising means for selecting a signal from one of the first and second filter means as the first time-varying component which is representative of engine speed.

12. A circuit as claimed in any of claims 7 to 11 wherein the means for producing the output signal comprises first and second peak detector means for producing first and second peak detector signals which are a function of positive and negative peak values of the first time-varying component, first and second comparator means for comparing the first time-varying component with the first and second peak detector signals to produce first and second comparator signals, respectively, the output being derived from the first and second comparator signals.

13. A method of measuring speed of an internal combustion engine of the type having an electrical ignition system connected to a battery, the method comprising deriving from current flow of the battery a time-varying signal associated with operation of the electrical ignition system; and providing an output signal representative of engine speed as a function of the time-varying signal.

14. The method of claim 13 wherein deriving the time-varying signal comprises removing a DC component of a signal received from the battery; filtering AC components of the signal received from the source to derive the time varying signal.

15. The method of claim 14 wherein filtering comprises removing the signal received from the battery signal components having frequencies outside a range associated with primary ignition current pulses.

16. The method of claim 14 wherein filtering comprises removing from the signal received from the battery signal components having frequencies outside a range associated with ignition bursts.

**Revendications**

1. Un circuit destiné à fournir un signal de sortie représentatif de la vitesse d'un moteur comportant un système d'allumage électrique relié à une batterie, le circuit comprenant un moyen pour produire le signal de sortie en fonction d'un signal choisi lié à la vitesse du moteur, caractérisé en ce que le circuit comprend aussi un moyen pour dériver le signal choisi à partir de la batterie, signal qui est représentatif d'une composante, variable avec le temps, de la sortie de la batterie en fonction de la vitesse du moteur.

2. Un circuit selon la revendication 1, dans lequel le moyen de dérivation choisit la composante variable avec le temps parmi les composantes de signaux associées au fonctionnement du système d'allumage électrique.

3. Le circuit selon la revendication 2, dans lequel le moyen de dérivation comprend un moyen d'élimination par filtrage de composantes variables avec le temps dont la fréquence est située en dehors d'une plage de fréquences normalement associées à des étincelles d'allumage afin de choisir une deuxième composante variable avec le temps, représentative de la vitesse du moteur, et dans lequel le moyen pour produire le signal de sortie comprend un moyen pour choisir l'une parmi la première et la deuxième composantes variables avec le temps.

4. Le circuit selon la revendication 2 dans lequel le moyen de dérivation comprend un moyen d'élimination par filtrage de composantes variables avec le temps dont la fréquence est située en dehors d'une plage de fréquences normalement associées à des étincelles d'allumage afin de choisir une deuxième composante variable avec le temps représentative de la vitesse du moteur.

5. Un circuit selon la revendication 4 dans lequel la plage de fréquences est supérieure à environ 10 kHz.

6. Un circuit selon la revendication 4 ou 5 dans lequel le moyen pour produire le signal de sortie comprend un premier et un deuxième moyens détecteurs de pics destinés à engendrer un premier et un deuxième signaux en fonction de valeurs de pics de la deuxième composante variable avec le temps, le premier et le deuxième moyens détecteurs de pics présentant différentes réponses de temps à la deuxième composante variable avec le temps; et un moyen comparateur pour comparer le premier et le deuxième signaux pour produire le signal de sortie.

**7.** Un circuit selon la revendication 1 ou 2 dans lequel le moyen de dérivation comprend un moyen pour éliminer par filtrage des composantes variables avec le temps dont la fréquence est située en dehors d'une plage de fréquences normalement associées à des impulsions primaires de courant d'allumage pour choisir une premiere composante variable avec le temps représentative de la vitesse du moteur.

**8.** Un circuit selon la revendication 7 dans lequel le moyen de filtrage comprend un premier moyen de filtrage pour éliminer par filtrage des fréquences autres que celles qui sont dans une première plage associée à des impulsions primaires de courant d'allumage produites par le moteur lorsqu'il est au point mort et un deuxième moyen de filtrage pour éliminer par filtrage des fréquences autres que celles qui sont dans une deuxième plage associée à des impulsions primaires de courant d'allumage produites par le moteur lorsqu'il monte en vitesse.

**9.** Un circuit selon la revendication 8 dans lequel la première plage est comprise entre environ 20 Hz et environ 50 Hz.

**10.** Un circuit selon la revendication 8, dans lequel la deuxième plage est comprise entre environ 50 Hz et environ 150 Hz

**11.** Un circuit selon la revendication 8, 9 ou 10, comprenant en outre un moyen pour choisir, comme premiere composante variable avec le temps qui est représentative de la vitesse du moteur, un signal provenant du premier ou du deuxième moyen de filtrage.

**12.** Un circuit selon l'une quelconque des revendications 7 à 11, dans lequel le moyen pour produire le signal de sortie comprend un premier et un deuxième moyens détecteurs de pics pour produire un premier et un deuxième signaux de détecteurs de pics qui sont fonction de valeurs positive et négative de pics de la première composante variable avec le temps, un premier et un deuxième moyens comparateurs pour comparer la premierecomposante variable avec le temps avec le premier et le deuxième signaux de détecteurs de pics pour produire un premier et un deuxième signaux de comparateur, respectivement, la sortie étant dérivée du premier et du deuxième signaux de comparateur.

**13.** Un procédé de mesure de vitesse d'un moteur à combustion interne du type comportant un système à allumage électrique relié à une batterie, le procédé comprenant une dérivation, à partir du débit de courant de la batterie, d'un signal variable avec le temps associé au fonctionnement du système d'allumage électrique; et une génération d'un signal de sortie représentatif de la vitesse du moteur en tant que fonction du signal variable avec le temps.

**14.** Un procédé selon la revendication 13, dans lequel la dérivation du signal variable avec le temps comprend l'enlèvement, d'un signal reçu de la batterie, d'une composante en courant continu et; le filtrage des composants en courant alternatif du signal reçu depuis la source pour dériver le signal variable avec le temps.

**15.** Le procédé selon la revendication 14 dans lequel le filtrage comprend le fait d'enlever, du signal reçu de la batterie, des composantes du signal dont les fréquences sont situées en dehors d'une plage associée à des impulsions primaires de courant d'allumage.

**16.** Le procédé selon la revendication 14 dans lequel le filtrage comprend le fait d'enlever, du signal reçu de la batterie, des composantes de signal dont les fréquences sont situées en dehors d'une plage associée à des étincelles d'allumage.

**Patentansprüche**

**1.** Schaltung zur Bildung eines Ausgangssignals, das die Drehzahl eines Motors mit einem mit einer Batterie verbundenen elektrischen Zündsystem darstellt, wobei die Schaltung Mittel zur Erzeugung des Ausgangssignals als Funktion eines zur Motordrehzahl in Beziehung stehenden ausgewählten Signals aufweist, dadurch gekennzeichnet, daß die Schaltung auch Mittel zum Ableiten des ausgewählten Signals von der Batterie aufweist, welches Signal für eine zeitlich veränderliche Komponente des Ausgangs der Batterie mit Bezug auf die Motordrehzahl repräsentativ ist.

**2.** Schaltung nach Anspruch 1, wobei die Mittel zum Ableiten die zeitlich veränderliche Komponente aus den dem Betrieb des elektrischen Zündsystems zugeordneten Signalkomponenten auswählen.

3. Schaltung nach Anspruch 2, wobei die Mittel zum Ableiten Mittel zum Ausfiltern der zeitlich veränderlichen Komponenten mit einer Frequenz außerhalb eines normalerweise Zündimpulsen zugeordneten Frequenzbereichs aufweisen, um eine für die Motordrehzahl repräsentative zweite zeitlich veränderliche Komponente auszuwählen, und wobei die Mittel zur Erzeugung des Ausgangssignals Mittel zum Auswählen der ersten oder der zweiten zeitlich veränderlichen Komponente einschließen.

4. Schaltung nach Anspruch 2, wobei die Mittel zum Ableiten Mittel zum Ausfiltern der zeitlich veränderlichen Komponenten mit einer Frequenz außerhalb eines normalerweise Zündimpulsen zugeordneten Frequenzbereichs aufweisen, um eine für die Motordrehzahl repräsentative zweite zeitlich veränderliche Komponente auszuwählen.

5. Schaltung nach Anspruch 4, wobei der Frequenzbereich größer als etwa 10 kHz ist.

6. Schaltung nach Anspruch 4 oder 5, wobei die Mittel zur Erzeugung des Ausgangssignals erste und zweite Spitzenwertdetektormittel zum Erzeugen erster und zweiter Signale als eine Funktion von Spitzenwerten der zweiten zeitlich veränderlichen Komponente, wobei die ersten und zweiten Spitzenwertdetektormittel verschiedene Zeit-Antworten auf die zweite zeitlich veränderliche Komponente zeigen; und Komparatormittel zum Vergleichen der ersten und zweiten Signale zur Erzeugung des Ausgangssignals aufweisen.

7. Schaltung nach Anspruch 1 oder 2, wobei die Mittel zum Ableiten Mittel zum Ausfiltern zeitlich veränderlicher Komponenten mit einer Frequenz außerhalb eines normalerweise primären Zündstromimpulsen zugeordneten Frequenzbereichs aufweisen, um eine für die Motordrehzahl repräsentative erste zeitlich veränderliche Komponente auszuwählen.

8. Schaltung nach Anspruch 7, wobei die Filtermittel erste Filtermittel zum Ausfiltern von Frequenzen außerhalb eines den vom leerlaufenden Motor erzeugten primären Zündstromimpulsen zugeordneten ersten Bereichs und zweite Filtermittel zum Ausfiltern von Frequenzen außerhalb eines den vom beschleunigenden Motor erzeugten primären Zündimpulsen zugeordneten zweiten Bereichs aufweisen.

9. Schaltung nach Anspruch 8, wobei der erste Bereich zwischen etwa 20 Hz und etwa 50 Hz liegt.

10. Schaltung nach Anspruch 8 oder 9, wobei der zweite Bereich zwischen etwa 50 Hz und etwa 150 Hz liegt.

11. Schaltung nach einem der Ansprüche 8 bis 10, die ferner Mittel zum Auswählen eines Signals von dem ersten oder dem zweiten Filtermittel als die für die Motorgeschwindigkeit repräsentative erste zeitlich veränderliche Komponente aufweist.

12. Schaltung nach einem der Ansprüche 7 bis 11, wobei die Mittel zur Erzeugung des Ausgangssignals erste und zweite Spitzenwertdetektormittel zum Erzeugung erster und zweiter Spitzenwertdetektorsignale, welche eine Funktion der positiven und negativen Spitzenwerte der ersten zeitlich veränderlichen Komponente sind, und erste und zweite Komparatormittel zum vergleichen der ersten zeitlich veränderlichen Komponente mit dem ersten und zweiten Spitzenwertdetektorsignal zum Erzeugen eines ersten bzw. zweiten Komparatorsignals aufweisen, wobei der Ausgang aus dem ersten und zweiten Komparatorsignal gewonnen wird.

13. Verfahren zum Messen der Drehzahl eines internen Verbrennungsmotors mit einem elektrischen, mit einer Batterie verbundenen Zündsystem, wobei das Verfahren das Ableiten eines zeitlich veränderlichen, dem Betrieb des elektrischen Zündsystems zugeordneten Signals vom Stromfluß der Batterie und das Liefern eines für die Motordrehzahl repräsentativen Ausgangssignals als eine Funktion des zeitlich veränderlichen Signals umfaßt.

14. Verfahren nach Anspruch 13, wobei das Ableiten des zeitlich veränderlichen Signals das Entfernen einer Gleichstromkomponente eines von der Batterie empfangenen Signals und das Filtern der Wechselstromkomponenten des von der Quelle empfangenen Signals zum Ableiten des zeitlich veränderlichen Signals umfaßt.

15. Verfahren nach Anspruch 14, wobei das Filtern das Entfernen der Komponenten des von der Batterie empfangenen Signals mit Frequenzen außerhalb eines den primären Zündstromimpulsen zugeordneten Bereichs umfaßt.

**16.** Verfahren nach Anspruch 14, wobei das Filtern ein Entfernen der Komponenten des von dem Batteriesignal empfangenen Signals mit Frequenzen außerhalb eines den Zündimpulsen zugeordneten Bereichs umfaßt.

FIG.1